# FASCICULE DE BREVET EUROPEEN

(11) **EP 3 870 324 B1**
(45) Date de publication et mention de la délivrance du brevet: **08.05.2024**
(21) Numéro de dépôt: 19789716.8
(22) Date de dépôt: 24.10.2019
(51) Int. Cl.: A63F 13/24, A63F 13/22

(54) **MANETTE DE JEU COMPORTANT AU MOINS UN ORGANE DE COMMANDE PIVOTANT DONT L'ANGLE D'ARRET EST MODIFIABLE**
SPIELE-CONTROLLER MIT MINDESTENS EINEM SCHWENKBAREN STEUERELEMENT MIT VERÄNDERBAREM ANSCHLAGWINKEL
GAME CONTROLLER COMPRISING AT LEAST ONE PIVOTING CONTROL MEMBER WITH A MODIFIABLE STOP ANGLE

(30) Priorité: 25.10.2018 FR 1859851
(43) Date de publication de la demande: 01.09.2021
(73) Titulaire: NACON, 59273 Fretin (FR)
(72) Inventeur: FALC, Alain, 59275 Fretin (FR); VANDEKERCKHOVE, Antoine, 59273 Fretin (FR); DELRUE, Valentin, 59273 Fretin (FR); ALLAERT, Yannick, 59273 Fretin (FR)
(74) Mandataire: Matkowska, Franck
(86) Numéro de dépôt international: PCT/EP2019/079016
(87) Numéro de publication internationale: WO 2020/084044

(56) Documents cités:
- WO-A1-2018/093328
- US-A- 5 883 690

## Description

### Domaine technique

La présente invention concerne le domaine des manettes de jeu comportant au moins un organe de commande pivotant, de type « stick » pivotant, notamment « joystick » ou « thumbstick », inclinable dans toutes les directions. Dans ce domaine, elle concerne un perfectionnement permettant à un utilisateur de la manette de jeu de modifier facilement la réactivité de l'organe de commande pivotant pour mieux adapter la manette au type de jeu piloté par la manette.

### Art antérieur

Il est aujourd'hui courant de commander un jeu vidéo au moyen d'une manette de jeu comportant au moins un organe de commande pivotant, de type « stick » pivotant analogique, notamment « joystick » ou « thumbstick », inclinable dans toutes les directions.

De manière usuelle, l'organe de commande pivotant comporte une position de repos centrale, dans laquelle il est rappelé élastiquement en rotation, et est couplé à des capteurs de déplacement mesurant la rotation de cet organe, par rapport à cette position de repos, autour de deux axes perpendiculaires. Les signaux de mesure analogiques délivrés par ces capteurs de déplacement sont traités automatiquement par un logiciel embarqué dans la manette de jeu, de telle sorte que l'actionnement manuel de cet organe de commande pivotant par le joueur permet d'interagir avec un jeu vidéo, par exemple pour déplacer un personnage ou un objet dans un jeu vidéo.

Plus particulièrement, pour commander des jeux vidéo, il est aujourd'hui usuel d'utiliser une manette de jeu comportant deux organes pivotants, généralement désignés « joysticks » et parfois également désignés « thumbsticks », qui sont actionnables indépendamment l'un de l'autre, au moyen respectivement des pouces droit et gauche d'un joueur tenant la manette.

Ce type de manette de jeu est décrit par exemple dans les publications suivantes : demandes de brevet internationales WO2016/200548, WO2016/200615, WO2016/210586 ; brevets américains US 9 971 420, US 9 710 072, US 9 868 058.

En pratique, une telle manette de jeu comporte une coque assemblée, généralement sous la forme d'au moins deux demi-coques assemblées entre-elles par tout moyen, par exemple au moyen de vis et/ou par collage et/ou par soudure. Cette coque est généralement ergonomique de manière à faciliter la prise en main(s) de la manette par un joueur.

Les moyens électroniques de commande de la manette sont logés à l'intérieur de ladite coque assemblée. Ces moyens électroniques de commande comportent notamment :
- les capteurs de déplacement susvisés, une ou plusieurs mémoires électroniques,
- un processeur qui est apte à exécuter automatiquement un logiciel embarqué, et qui peut être implémenté par exemple au moyen d'un microprocesseur, d'un microcontrôleur, d'un circuit électronique programmable de type FPGA ou d'un circuit électronique spécifique de type ASIC,
- la connectique permettant de faire communiquer le processeur avec une console de jeu ou équivalent.

Pour chaque organe de commande pivotant de type «joystick », la coque de la manette de jeu comporte une ouverture à travers laquelle est passé l'organe de commande pivotant.

Plus particulièrement chaque organe pivotant comporte un élément de base pivotant qui est passé à travers une ouverture de la coque, dont l'extrémité inférieure est logée à l'intérieur de la coque assemblée et est couplée aux capteurs de déplacement, et une tête ergonomique pour la manipulation de l'organe de commande pivotant, et par exemple une tête dont la surface supérieure peut être bombée de forme concave ou convexe ou peut être plane.

A l'origine, la tête et l'élément de base pivotant étaient conçus de manière à former un ensemble monolithique fait d'une seule pièce ou de plusieurs pièces assemblées entre elles de manière définitive.

Plus récemment, afin de permettre notamment à un joueur de choisir la tête d'organe de commande qui lui convient le mieux, les fabricants de manettes de jeu ont proposé des manettes de jeux avec plusieurs têtes d'organe de commande pivotant, de type « joystick », facilement interchangeables. On peut à ce sujet se référer aux publications susvisées WO2016/200548 et WO2016/200615, qui décrivent des solutions d'organes de commande pivotants de type « joystick» pour manette de jeu dont la tête peut être montée de manière amovible sur l'élément de base pivotant, les moyens d'assemblage de la tête et de l'élément de base pivotant pouvant être de type mécanique uniquement ou au moins en partie de type magnétique.

Dans les manettes de jeu connues à ce jour, l'organe de commande pivotant de type « joystick » est inclinable en rotation manuellement, depuis sa position de repos, et dans toutes les directions jusqu'à une position extrême, dite par la suite « position d'arrêt », dans laquelle l'organe de commande pivotant est en butée et son inclinaison est bloquée. Cette position d'arrêt pour chaque direction d'inclinaison de l'organe de commande pivotant permet de définir un angle d'arrêt de l'organe de commande pivotant par rapport à sa position de repos. Lorsque l'utilisateur relâche l'organe de commande pivotant, celui-ci est rappelé élastiquement en rotation vers sa position de repos, par des moyens mécaniques de rappel adaptés de type ressort(s) de rappel.

Généralement, la position de repos de l'organe de commande pivotant est une position centrale et la valeur de l'angle d'arrêt de l'organe de commande pivotant est la même sur 360° pour toutes les directions d'inclinaison de l'organe de commande et est de l'ordre de 38°. Il est néanmoins concevable de réaliser un organe de commande pivotant pour manette de jeu ayant au moins deux valeurs d'angle différentes pour différentes directions d'inclinaison.

Selon le type de manette de jeu, la position d'arrêt de l'organe de commande pivotant peut être obtenue de différentes manières.

Dans un premier type connu de manette de jeu, cette position d'arrêt est obtenue en utilisant comme butée basse en rotation le bord périphérique de l'ouverture à travers laquelle est passé l'organe de commande pivotant ou le bord intérieur d'un anneau rapporté fixé au niveau de cette ouverture et entourant l'organe de commande pivotant.

Dans la demande de brevet internationale WO2018/093328, il est proposé de mettre en oeuvre des anneaux rapportés et amovibles ayant des diamètres différents, afin de pouvoir régler l'angle d'inclinaison de l'organe de commande pivotant en position d'arrêt.

Dans un deuxième type connu de manette de jeu, décrit notamment dans les publications WO2016/200548 et WO2016/200615, cette position d'arrêt est obtenue au moyen d'une pièce en forme de dôme, qui est fixée sur l'organe de commande pivotant en étant logée à l'intérieur de la coque de la manette de jeu, et qui est adaptée pour venir en butée avec une partie interne à la coque de la manette à fonction de butée haute. Cette butée haute est constituée par exemple d'une partie interne de la coque à proximité de l'ouverture à travers laquelle est passé l'organe de commande pivotant ou par une partie interne à la coque d'un anneau rapporté fixé au niveau de cette ouverture et entourant l'organe de commande pivotant.

Dans le brevet US 5 883 690, on a par ailleurs proposé une manette de jeu dont l'organe de commande pivotant comporte une tête qui peut être assemblée de manière amovible avec un arbre pivotant de l'organe de commande sans désassembler la coque de la manette de jeu et qui peut être désassemblée de l'arbre pivotant sans désassembler la coque de la manette de jeu. Avec certains jeux vidéo, et par exemple avec des jeux de combats, il est souhaitable pour le joueur de pouvoir être le plus réactif possible et à cet effet d'avoir une manette de jeu plus réactive lui permettant d'amener le plus rapidement possible l'organe de commande pivotant en position d'arrêt dans une direction inclinaison. Avec d'autres types de jeux vidéo, la vitesse pour amener l'organe de commande pivotant en position d'arrêt est moins cruciale et la manette de jeu utilisée peut ainsi être moins réactive.

### Objectif de l'invention

L'invention a ainsi pour objectif principal de proposer une nouvelle solution technique qui permet à un joueur de modifier facilement et rapidement la réactivité d'une manette de jeu, en particulier pour l'adapter à différents types de jeux vidéo.

Un objectif plus particulier de l'invention est de proposer une nouvelle solution technique qui permet à un joueur d'augmenter facilement et rapidement la réactivité d'une manette de jeu, en particulier pour la rendre plus adaptée à une utilisation avec des jeux vidéo de combats.

### Résumé de l'invention

### L'invention a ainsi pour objet un ensemble défini dans la revendication 1

Plus particulièrement, l'ensemble de l'invention peut comporter les caractéristiques additionnelles et optionnelles suivantes, prises isolément, ou en combinaison les unes avec les autres et définies dans les revendications 2 à 10.

L'invention a également pour autre objet un procédé de réglage d'un ensemble susvisé, tel défini dans la revendication 11 ou 12.

### Brève description des dessins

Les caractéristiques et avantages de l'invention apparaîtront plus clairement à la lecture de la description détaillée ci-après de plusieurs variantes particulières de réalisation de l'invention, lesquelles variantes particulières de réalisation sont décrites à titre d'exemples non limitatifs et non exhaustifs de l'invention, et en référence aux dessins annexés sur lesquels :
- la figure 1 est une vue en perspective isométrique d'une variante de réalisation d'une manette de jeu conforme à l'invention ;
- la figure 2 est une vue éclatée d'un exemple de réalisation d'un organe de commande pivotant de la manette de jeu de la figure 1 ;
- la figure 3 est une vue isométrique de l'organe de commande pivotant de la figure 2, une fois l'organe de commande pivotant assemblé et monté à travers l'ouverture d'un insert cylindrique fixé à travers la coque de la manette de jeu, la coque de la manette de jeu n'étant pas représentée sur cette figure 3, l'organe de commande pivotant étant dans sa position de repos, et l'insert comportant en partie supérieure un anneau, qui en entoure l'organe de commande pivotant ;
- la figure 4 est une vue en coupe transversale de l'assemblage de la figure 3 ;
- la figure 5 est une vue isométrique de l'assemblage de la figure 3, lorsque l'organe de commande est incliné en position d'arrêt ;
- la figure 6 est une vue en coupe transversale de l'assemblage de la figure 5 ;
- la figure 7 montre un ensemble de trois têtes amovibles permettant d'obtenir respectivement trois réglages différents de l'angle d'arrêt de l'organe de commande pivotant de la manette de jeu ;
- la figure 8 une vue isométrique de l'organe de commande pivotant de la figure 2, une fois l'organe de commande pivotant assemblé et monté à travers l'ouverture d'un insert cylindrique fixé à travers la coque (non représentée sur cette figure) de la manette de jeu, l'organe de commande pivotant étant dans sa position de repos, et l'insert comportant en partie supérieure un anneau, qui en entoure l'organe de commande pivotant et dont le diamètre intérieur est supérieur à celui de la figure 3 ;
- la figure 9 est une vue isométrique de l'assemblage de la figure 8, lorsque l'organe de commande est incliné en position d'arrêt.

### Description détaillée

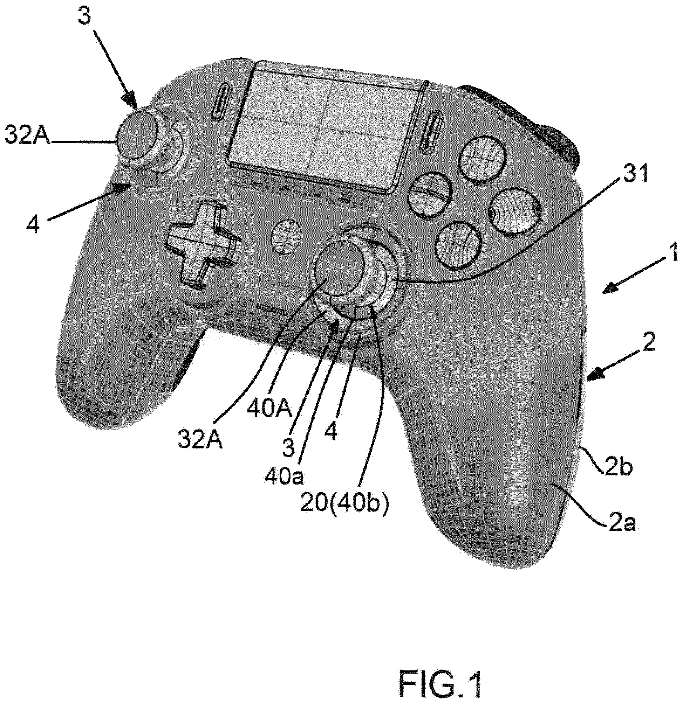

On a présenté sur la figure 1, un exemple particulier de manette de jeu 1 comportant une coque 2 assemblée, et des moyens de commande comprenant notamment deux organes de commande 3 pivotants : un organe pivotant 3 localisé dans la partie gauche de la manette de jeu 1 et un organe pivotant 3 localisé dans la partie droite de la manette de jeu 1.

La coque 2 assemblée comprend, de manière connue en soi, une demi-coque supérieure 2a, qui est assemblée par tout moyen, par exemple mécaniquement au moyen de vis ou équivalent et/ou par collage et/ou par soudure, avec une demi-coque inférieure 2b.

Dans cet exemple particulier, la coque 2 assemblée présente plus particulièrement une forme ergonomique adaptée pour faciliter sa prise à deux mains par un joueur.

Chaque organe pivotant 3 est passé à travers une ouverture 20 de la demi-coque supérieure 2a, plus particulièrement une ouverture 20 circulaire.

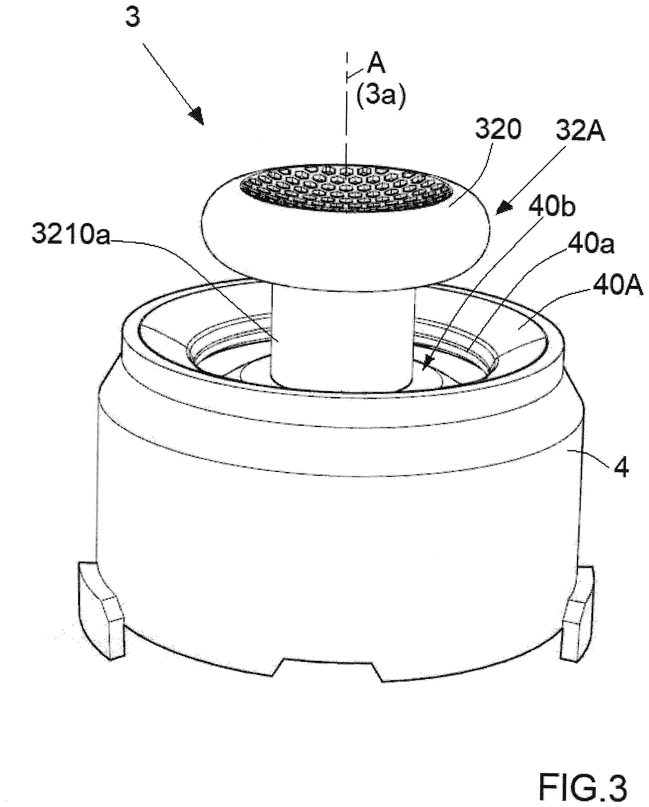

Plus particulièrement dans cet exemple particulier de réalisation, en référence aux figures 1 et 3, et de manière non limitative de l'invention, au niveau de chaque ouverture 20 circulaire de la demi-coque supérieure 2a, la manette de jeu 1 comporte un insert tubulaire 4, de forme cylindrique, qui est monté dans une ouverture 20 de la demi-coque supérieure 2a de la manette 2, et est fixé à la demi-coque supérieure 2a. La partie supérieure de cet insert 4 est pourvue d'un anneau 40A dont le bord intérieur 40a délimite une ouverture circulaire 40b (figure 3) de plus petit diamètre que le diamètre de l'ouverture 20 de la coque 2. Lorsque cet insert tubulaire 4 est monté et est fixé dans une ouverture 20 circulaire de la demi-coque supérieure 2a de la manette de jeu 1, l'ouverture circulaire 40b de cet insert tubulaire 4 est centrée par rapport à cette ouverture 20.

Dans une autre variante de réalisation, la manette de jeu peut ne pas comporter un tel insert tubulaire 4, et/ou peut ne pas comporter d'anneau 40A. En l'absence d'anneau 40A, le bord intérieur 40a susvisé est remplacé par le bord intérieur de l'ouverture 20 dans la demi-coque supérieure 2a de la manette de jeu. Dans une autre variante de réalisation, l'anneau 40A peut faire partie intégrante de la demi-coque supérieure 2a ou être une pièce rapportée, qui peut est fixée de manière définitive ou amovible à l'insert tubulaire 4 ou directement au niveau de l'ouverture 20 de la demi-coque supérieure 2a.

Dans l'exemple particulier de réalisation de la figure 1, chaque organe pivotant 3 est de type «joystick», et est positionné à proximité du bord de la coque 2, de manière à pouvoir être facilement manipulé par le pouce gauche ou le pouce droit d'un joueur tenant la manette de jeu.

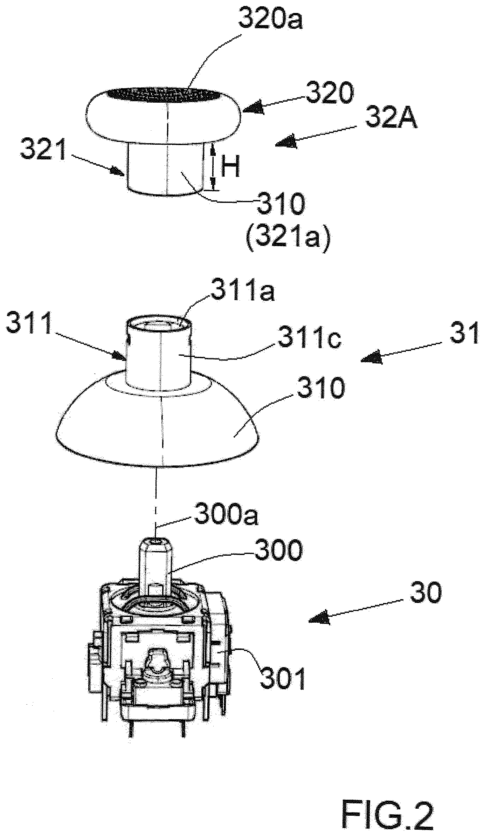

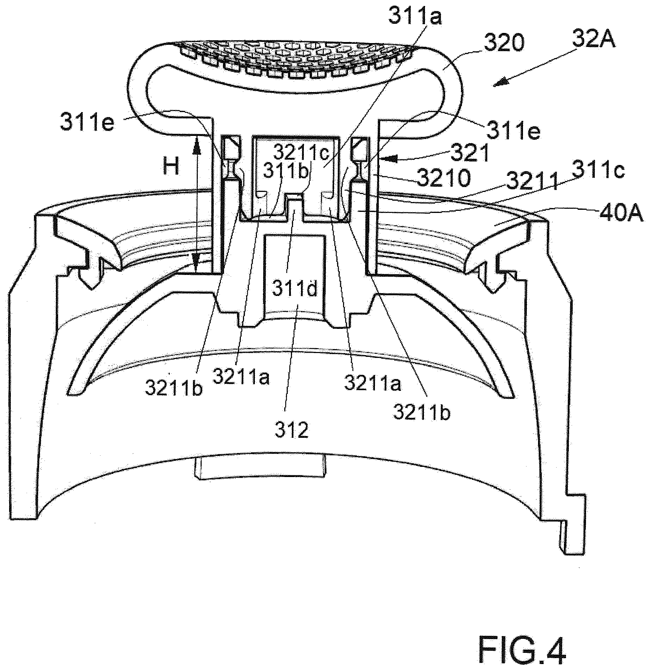

Chaque organe de commande pivotant 3 de la manette de jeu 1 est constitué par un assemblage monolithique de plusieurs éléments 30, 31, 32A, qui vont à présent être décrits en référence aux figures 2 et 4.

### Organe de commande pivotant 3

L'élément 30 (figure 2) de chaque organe de commande pivotant 3 est un élément de base qui est destiné à être monté et fixé de manière définitive par rapport à la coque 2 de la manette de jeu. Cet élément de base 30 de chaque organe de commande pivotant 3 est connu et sera donc décrit succinctement ci-après.

En référence à la figure 2, cet élément de base 30 comporte un arbre (« stick ») cylindrique 300, d'axe central 300a, qui est monté pivotant par rapport à un boîtier 301. Cet arbre cylindrique 300 pivotant est apte à être incliné manuellement par rapport au boîtier 301, dans toutes les directions, depuis une position de repos centrale, illustrée sur les figures 1 et 2, dans laquelle il est rappelé élastiquement en rotation. Les moyens de rappel élastique en rotation dans la position de repos centrale de cet arbre 300 sont connus et ne seront donc pas détaillés. Ces moyens de rappel élastique, de type ressorts, sont logés à l'intérieur du boîtier 301.

Cet arbre pivotant 300 est par ailleurs, et de manière usuelle, couplé à des capteurs de déplacement analogiques, par exemple des capteurs de type potentiomètres, qui sont logés à l'intérieur du boîtier 301, et qui permettent de mesurer les angles de rotation de cet arbre 300, respectivement autour de deux axes de rotation de référence, qui sont perpendiculaires entre eux et qui définissent un plan perpendiculaire à l'axe central 300a de l'arbre 300 dans sa position de repos de la figure 2. De manière connue, ces capteurs délivrent des signaux de mesure analogiques caractéristiques de la valeur instantanée de l'angle formé par l'axe central 300a de l'arbre 300, autour de chaque axe de rotation de référence, par rapport à la position de repos de cet axe 300a.

L'élément de base 30 est monté et fixé à l'intérieur de la coque 2 de la manette de jeu 1, de telle sorte que d'une part son boîtier 301 est intégralement logé à l'intérieur de la coque assemblée 2 et est fixé à la coque assemblée 2, et d'autre part que son arbre 300 pivotant est positionné perpendiculairement à l'ouverture circulaire 40b de l'anneau 40 de l'insert 4 précédemment décrit et est centré par rapport à cette ouverture circulaire 40b.

L'élément 31 de chaque organe de commande pivotant 3 est une pièce de protection qui est symétrique et rigide, et qui comporte :
- en partie inférieure une coupole 310 en forme de dôme
   et
- en partie supérieure un embout d'assemblage cylindrique 311, qui est centré par rapport à la coupole inférieure 310, l'axe de symétrie central de la coupole 310 étant confondu avec l'axe de symétrie central de cet embout cylindrique 311.

Plus particulièrement, l'embout d'assemblage cylindrique 311 comporte une cavité 311a (figures 2 et 4) qui est ouverte en partie supérieure et qui est délimitée par une paroi de fond 311b et une paroi latérale 311c, de préférence cylindrique. La paroi de fond comporte (figure 3) un ergot central 311d en saillie. La paroi latérale 311c comporte des lumières d'assemblage 311e de préférence diamétralement opposées.

En référence à la figure 3, l'élément de protection 31 comporte en outre dans sa partie inférieure un logement cylindrique 312 central. Ce logement cylindrique 312 central est dimensionné de manière à permettre un emboîtement serré dans ce logement 312 de l'arbre pivotant 300 de l'élément de base 30. La section transversale de ce logement cylindrique 312 et la section transversale de l'arbre pivotant 300 ne sont pas circulaires et sont choisies de manière à permettre un blocage en rotation dans ce logement 312 de l'arbre pivotant 300 autour de son axe central. Le montage de l'élément 31 est effectué simplement en emboîtant axialement l'élément 31 sur l'arbre pivotant 300 de l'élément de base 30.

La coupole 310 de l'élément 31 de protection est dimensionnée de telle sorte que son diamètre extérieur maximum est supérieur au diamètre de l'ouverture 40b de l'anneau 40 de l'insert 4. La coupole de l'élément 31 permet d'obturer partiellement l'ouverture 40b de l'insert 4, sans faire obstacle au pivotement de l'arbre 300 de l'élément de base 30, ce qui permet notamment d'éviter l'introduction accidentelle de corps ou éléments étrangers à l'intérieur de la coque 2 assemblée et permet également d'améliorer l'aspect esthétique de la manette de jeu 1.

L'élément 32A constitue la tête de l'organe de commande pivotant 3 et une fois monté se trouve positionné (figure 1) à l'extérieur de la coque assemblée. Cette tête 32A présente une géométrie et des dimensions adaptées pour la manipulation par un joueur de l'organe de commande pivotant 3, au moyen de préférence de l'un de ses deux pouces.

Plus particulièrement, cette tête 32A est amovible de manière à pouvoir être facilement et rapidement montée ou retirée par un utilisateur, notamment sans devoir désassembler la coque 2 de la manette de jeu 1.

Dans cet exemple particulier, cette tête 32A est une pièce monobloc, par exemple en plastique injecté.

Cette tête 32 comporte une partie supérieure 320, sensiblement en forme de disque, et une partie inférieure 321 cylindrique, de hauteur H, qui est orientée perpendiculairement à ladite partie supérieure 320 en forme de disque, et qui est centrée par rapport à ladite partie supérieure 320 en forme de disque. Cette partie inférieure 321 cylindrique forme le pied de la tête 32A.

Dans une autre variante de réalisation, la partie supérieure 320 sensiblement en forme de disque et le pied cylindrique 321 pourraient être deux sous-éléments assemblés entre eux par tout moyen, de manière définitive et robuste.

La face supérieure 320a de la tête 32A peut par exemple être courbe et concave tel qu'illustré sur la figure 4. Dans une autre variante, la face supérieure 320a de la tête 32A peut par exemple être bombée et convexe ou peut être plane.

Le pied 321 cylindrique de la tête 32 comporte une partie extérieure 3210 de forme cylindrique et une partie interne 3211, positionnée à l'intérieur de la partie extérieure 3210 cylindrique.

Plus particulièrement, la partie extérieure 3210 de forme cylindrique du pied 321 comporte une face extérieure 3210a, qui forme, sur toute la hauteur H du pied 321, un cylindre droit de section transversale circulaire.

Dans une autre variante de réalisation, cette face extérieure 3210a pourrait former un cylindre droit de section transversale circulaire uniquement sur une partie de la hauteur H du pied 321.

La section intérieure de cette partie extérieure 3210 du pied 321 est choisie de manière à permettre le montage de cette partie extérieure 3210 sur l'embout d'assemblage 311 de l'élément 31 avec un jeu minimum juste suffisant pour permettre un coulissement axial guidé de la partie extérieure 3210 cylindrique sur l'embout d'assemblage 311 de l'élément 31.

Tel que cela apparaîtra plus clairement ultérieurement, le choix du diamètre extérieur de cette partie extérieure 3210 du pied 321 permet un réglage de l'angle d'arrêt de l'organe de commande pivotant 3

La partie interne 3211 du pied 321 comporte des pattes 3211a diamétralement opposées, qui sont pourvues chacune d'un ergot d'assemblage 3211b externe. Chaque ergot d'assemblage 3211b peut être enfoncé sous l'action d'une contrainte mécanique et peut, en l'absence d'une contrainte mécanique, reprendre élastiquement sa position de repos de la figure 2, dans laquelle il est en saillie vers l'extérieur de la patte 3211a. La partie interne 3211 du pied 321 comporte également une fente inférieure 3211c adaptée à la géométrie de l'ergot 311d de la pièce de protection 31.

Pour assembler la tête 32A avec l'élément de protection 31, (figure 3) il suffit d'insérer axialement à la main la partie interne 3211 du pied 321 cylindrique de la tête 32 dans la cavité cylindrique 311a de l'embout d'assemblage cylindrique 311 de l'élément de protection 31, jusqu'à ce que l'ergot 311d en saillie dans le fond de la cavité cylindrique 311a pénètre dans la fente 3211c, ce qui permet en final d'obtenir un blocage en rotation de la tête 32A par rapport à l'élément de protection 31. Au cours de cette insertion axiale, on obtient un léger enfoncement de chaque ergot 3211b vers l'intérieur des pattes 3211a jusqu'à ce que chaque ergot 3211b soit positionné en vis-à-vis d'une lumière d'assemblage 311e de l'embout d'assemblage cylindrique 311 et pénètre dans cette lumière d'assemblage 311e (configuration de la figure 3), ce qui permet un blocage axial de la tête 32A par rapport à l'élément de protection 31.

L'élasticité en flexion des ergots d'assemblage 3211b permet en outre un serrage radial de la partie interne 3211 cylindrique de la tête 32A par rapport à l'embout d'assemblage cylindrique 311. Ce serrage radial est suffisamment fort pour éviter un déboîtement accidentel de la tête 32A par rapport à l'élément de protection 31. En revanche, ce serrage radial est suffisamment faible pour permettre à un utilisateur de déboîter intentionnellement la tête 32A de l'élément de protection 31, en tirant axialement à la main et avec une force suffisante sur la tête 32A, de manière à obtenir, sous l'effet de cette traction axiale, un enfoncement des ergots d'assemblage 3211b vers l'intérieur des pattes 3211a qui est suffisant pour faire sortir les ergots 3211b de leurs lumières d'assemblage respectives 311e.

La tête 32A est peut ainsi facilement et rapidement être emboîtée de manière amovible à la main par un joueur sur l'élément de protection 31 ou être facilement et rapidement retirée à la main par un joueur, sans devoir désassembler la coque 2 de la manette de jeu 1.

### Montage et assemblage de l'organe pivotant

Le montage et l'assemblage d'un organe pivotant 3 est réalisé par exemple en procédant de la manière suivante.

Chaque élément de base 30 assemblé avec l'élément de protection 31 associé est fixé dans l'une des demi-coques supérieure 2a ou inférieure 2b à un emplacement prédéfini et est connecté électriquement à un circuit de commande électronique de la manette de jeu destiné à être logé à l'intérieur de la coque 2.

Ce circuit de commande électronique permet notamment le traitement automatique des signaux de mesure délivrés par les capteurs de déplacement en rotation de l'organe de commande pivotant 3. Ce circuit de commande électronique peut comporter une ou plusieurs mémoires électroniques, un processeur qui est apte à exécuter automatiquement un logiciel embarqué, et qui peut être implémenté par exemple au moyen d'un microprocesseur, d'un microcontrôleur, d'un circuit électronique programmable de type FPGA ou d'un circuit électronique spécifique de type ASIC, et un ou plusieurs connecteurs permettant de faire communiquer le processeur avec une console de jeu ou équivalent.

Ensuite, la demi-coque supérieure 2a pourvue d'un insert tubulaire 4 au niveau de chaque ouverture 20 est positionnée sur la demi-coque inférieure 2b, de telle sorte que l'arbre 300 de chaque organe de commande pivotant 30, dans sa position de repos centrale et portant l'élément de protection 31, est orienté perpendiculairement par rapport à l'ouverture circulaire 40b de l'insert tubulaire 4 et est centré par rapport à cette ouverture circulaire 40b. Enfin, les deux demi-coques 2a, 2b sont assemblées entre elles, par exemple au moyen de vis.

Une fois que les deux demi-coques 2a,2b sont assemblées pour former la coque 2 de la manette de jeu 1, tel qu'illustré sur la figure 3, l'embout d'assemblage cylindrique 311 de l'élément de protection 31, qui est également centré par rapport à l'ouverture circulaire 40b de l'insert tubulaire 4, est de préférence passé à travers l'ouverture 40b de l'insert et ressort à l'extérieur de la coque 2 assemblée, de telle sorte qu'il est au moins en partie situé et facilement accessible à l'extérieur de la coque 2 assemblée.

Les étapes d'assemblage susvisées sont réalisées en usine.

L'utilisateur peut facilement et rapidement fixer la tête 32A sur l'élément de protection 31 en emboîtant axialement et de manière amovible, cette tête 32A sur l'embout d'assemblage cylindrique 311 de l'élément de protection 31.

### Angle d'arrêt de l'organe de commande pivotant 3

On a référencé A sur la figure 3, l'axe de symétrie central de l'insert tubulaire 4, c'est-à-dire dans cet exemple particulier de réalisation l'axe de symétrie central de l'ouverture circulaire 40b délimitée dans la coque 2 assemblée par le bord intérieur 40a de l'anneau supérieur 40A de cet insert 4.

Sur cette figure 3, l'organe de commande pivotant 3 se trouve dans sa position de repos centrale, son axe de symétrie 3a étant, dans cette position de repos centrale, confondu avec l'axe de symétrie central A de l'ouverture circulaire 40b.

Tel que précédent décrit, l'utilisateur de la manette de jeu 1 peut faire pivoter manuellement cet organe de commande 3 dans toutes les directions en l'inclinant par rapport à la position de repos centrale de la figure 3. Lorsque l'utilisateur de la manette de jeu 1 relâche cet organe de commande 3, ce dernier reprend élastiquement sa position de repos centrale de la figure 3.

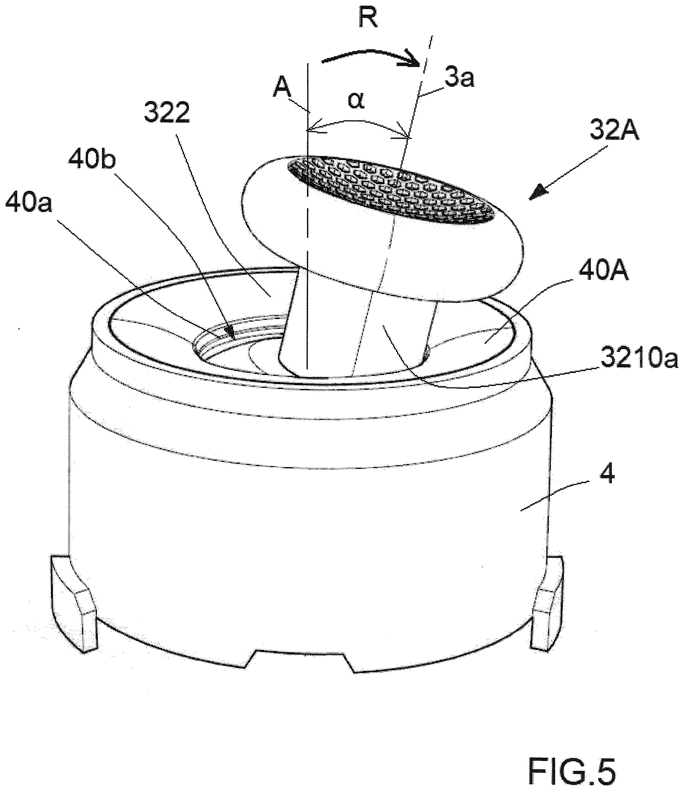

Quelle que soit sa direction d'inclinaison, l'organe de commande 3, (figure 5 / rotation R) peut être incliné jusqu'à une position d'arrêt, telle que celle par exemple de la figure 5. Dans cette position d'arrêt, la face extérieure 3210a cylindrique du pied 321 est en butée et l'inclinaison de l'organe de commande 3 pivotant est ainsi bloquée dans cette position d'arrêt. La face extérieure 3210a cylindrique du pied 321 permet ainsi de régler la course maximale de l'inclinaison de l'organe de commande pivotant 3.

Dans le cas particulier de la figure 5, le bord intérieur 40a de l'anneau 40A entoure l'organe de commande 3 sur toute sa périphérie. Dans la position d'arrêt de l'organe de commande 3, l'organe de commande 3 est en butée contre le bord intérieur 40a de l'anneau 40A par l'intermédiaire du pied 321 de la tête 32, le bord intérieur 40a de l'anneau 40A remplissant une fonction de butée basse en rotation.

La position d'arrêt de l'organe de commande 3 est caractérisée par un angle d'arrêt α (figure 5), qui correspond à l'angle maximum formé par les deux axes de symétrie centraux A et 3a pour une direction d'inclinaison donnée de l'organe de commande 3.

Dans l'exemple de réalisation des figures annexées, mais de manière non limitative de l'invention, la valeur de l'angle d'arrêt α est de préférence la même pour toutes les directions d'inclinaison de l'organe de commande 3.

Dans une autre variante de réalisation, la valeur de l'angle d'arrêt α peut être différente pour au moins deux directions d'inclinaison différentes de l'organe de commande 3 et/ou la géométrie de l'ouverture 40b n'est pas nécessairement circulaire, mais peut par exemple être de type polygonal ou de type elliptique et/ou la position de repos n'est pas nécessairement une position centrale et/ou la section transversale de face extérieure 3210a cylindrique du pied 321 n'est pas nécessairement circulaire, mais peut par exemple être de type polygonal ou de type elliptique

Typiquement, la valeur de l'angle d'arrêt de l'organe commande pivotant 3 d'une manette de jeu est inférieur à 90° et généralement comprise entre 20° et 70°.

### 1^{ère} variante : Réglage de l'angle d'arrêt par une sélection de la tête (32A, 32B ou 32C) de l'organe de commande (3)

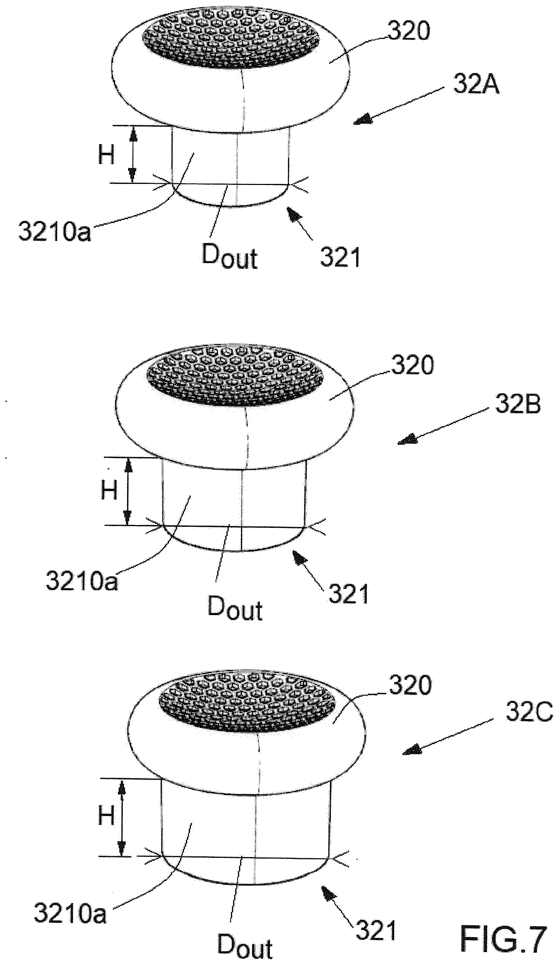

Dans une variante de réalisation de l'invention, l'utilisateur de la manette de jeu 1 a à sa disposition plusieurs têtes amovibles différentes (au moins deux têtes différentes par organe de commande pivotant), telles que par exemple la tête amovible 32A susvisée et les têtes amovibles référencées 32B et 32C sur la figure 7.

Ces têtes amovibles 32A, 32B et 32C possèdent des pieds 321 dont les parties internes 3211 sont identiques et dont les parties externes 3210 ont la même section intérieure, et notamment les mêmes diamètres intérieurs, afin de permettre l'emboîtement élastique et amovible de chaque tête 32A, 32B, 32C sur le même élément de protection 31. Les pieds 321 de têtes amovibles 32A, 32B et 32C ont de préférence la même hauteur H.

En revanche les diamètres extérieurs Dₒᵤₜ de la face extérieure 3210a cylindrique des pieds 321 des têtes amovibles 32A, 32B et 32C sont différents, par exemple en mettant en oeuvre des parties externes 3210 cylindriques d'épaisseurs différentes.

La valeur de l'angle d'arrêt α de l'organe de commande 3 dépend du diamètre extérieur Dₒᵤₜ du pied 321 de la tête amovible 32A, 32B ou 32C utilisée. Plus ce diamètre extérieur est important, et plus valeur de l'angle d'arrêt α sera faible, et inversement.

Dans l'exemple particulier de la figure 7, la tête 32A présente le plus petit diamètre extérieur Dₒᵤₜ. Cette tête 32A permet d'obtenir la valeur d'angle d'arrêt α le plus important et permet par exemple un angle d'arrêt de 46°.

La tête 32C présente le plus grand diamètre extérieur Dₒᵤₜ. Cette tête 32C permet d'obtenir la valeur d'angle d'arrêt α la plus faible et permet par exemple un angle d'arrêt de 30°.

La tête 32b présente un diamètre extérieur Dₒᵤₜ compris entre les diamètres extérieurs Dₒᵤₜ des têtes 32A et 32C et permet ainsi d'obtenir une valeur d'angle d'arrêt α intermédiaire et par exemple un angle d'arrêt α de 38°.

Plus la valeur de l'angle d'arrêt α est faible et plus la réactivité de de l'organe de commande 3 pivotant de la manette de jeu est importante et inversement.

Plus la valeur de l'angle d'arrêt α est faible et plus la réactivité de de l'organe de commande 3 pivotant de la manette de jeu est importante et inversement.

Grâce aux têtes amovibles 32A, 32B, 32C, l'utilisateur de la manette peut avantageusement régler très facilement et très rapidement la réactivité d'un organe de commande pivotant 3 de sa manette de jeu 1, notamment pour rendre cette réactivité plus adaptée au type de jeu auquel il souhaite jouer. Il lui suffit de choisir la tête 32A, 32B, 32C dont le diamètre extérieur Dₒᵤₜ correspond à la réactivité souhaitée par l'utilisateur pour l'organe de commande pivotant 3 et d'adapter cette tête amovible sur la manette de jeu 1, sans devoir désassembler la coque 2 assemblée de la manette de jeu 1.

Ainsi, lorsque l'utilisateur de la manette de jeu souhaite avoir une manette plus réactive, par exemple pour jouer à un jeu de combat, il peut choisir d'équiper sa manette de jeu 1 avec la tête amovible 32C permettant d'obtenir l'angle d'arrêt α le plus faible. Lorsque l'utilisateur de la manette de jeu souhaite avoir une manette moins réactive, il peut choisir d'équiper sa manette de jeu 1 avec la tête amovible 32A ou 32B permettant d'obtenir des valeurs d'angle d'arrêt α plus importantes.

Cette première variante (plusieurs têtes amovibles) peut être mise en oeuvre avec un anneau 40A qui n'est pas amovible, et qui est fixé de manière définitive à la coque 2 de la manette de jeu 1, par exemple en étant fixé de manière définitive à l'insert 4 ou en faisant partie intégrante de cet insert 4.

### 2^{ème} variante : Réglage additionnel de l'angle d'arrêt par une sélection d'un anneau amovible (40A, 40B)

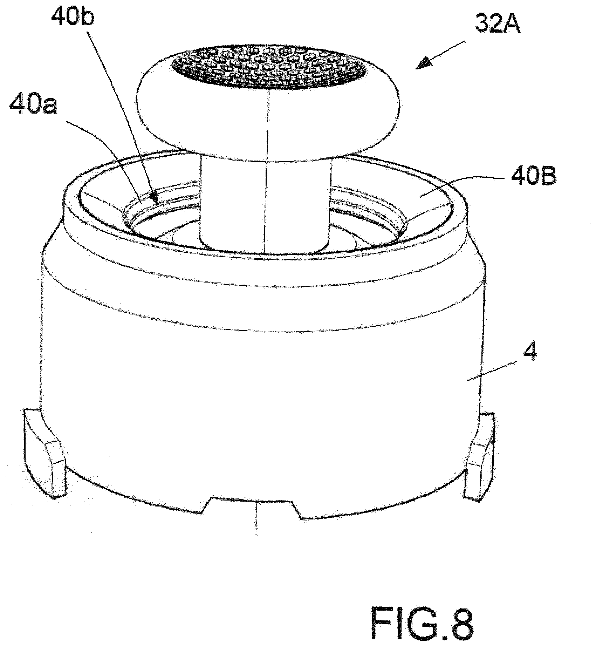

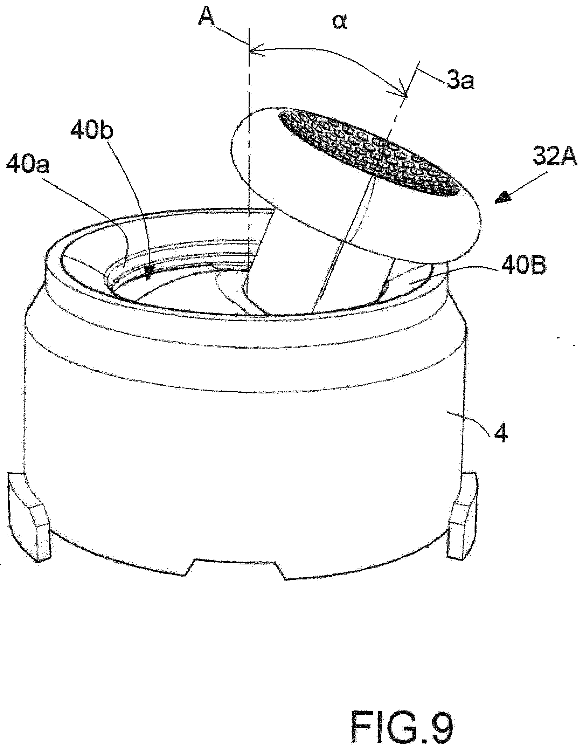

Dans une deuxième variante de réalisation, l'utilisateur de la manette de jeu 1 a à sa disposition en plus des têtes 32A, 32B, ou 32C plusieurs anneaux différents (au moins deux anneaux différents par organe de commande pivotant 3), tels que par exemple l'anneau 40A précédemment décrit et illustré sur les figures 3 à 6, et l'anneau 40B illustré sur les figures figure 8 et 9.

Dans le cas de cette deuxième variante, chaque anneau 40A, 40B est apte à être fixé de manière amovible, et notamment à être emboîté, sur la coque 2 de la manette, et plus particulièrement sur l'insert 4, sans désassembler la coque 2, et peut également être retiré sans désassembler la coque 2.

Les sections intérieures des anneaux 40A et 40B sont différentes, et plus particulièrement dans le cas particulier des figures annexées, le bord intérieur 40a de l'anneau 40A délimite une ouverture circulaire 40b (figures 3 et 4) dont le diamètre (figures 8 et 9) est inférieur au diamètre de l'ouverture circulaire 40b délimitée par le bord intérieur 40a de l'anneau 40A.

La valeur de l'angle d'arrêt α de l'organe de commande 3 dépend du diamètre intérieur de cette ouverture circulaire 40b délimitée par le bord intérieur 40a de l'anneau 40A ou 40B. Plus ce diamètre intérieur est faible, et plus valeur de l'angle d'arrêt α sera faible, et inversement.

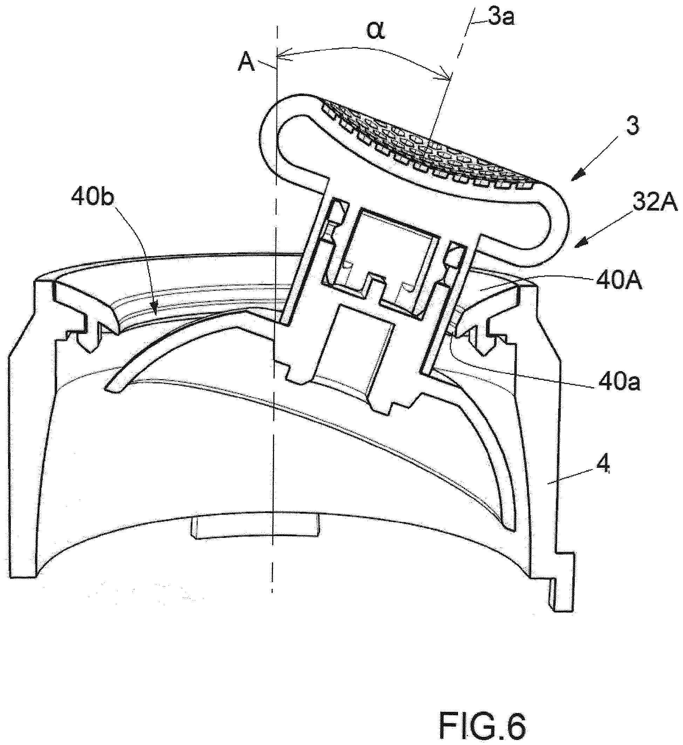

Il en résulte qu'en utilisant la même tête pour l'organe de commande ( par exemple la tête 32A sur les figures 3, 4, 8 et 9), avec l'anneau 40A de plus faible diamètre intérieur, on obtient pour chaque direction d'inclinaison de l'organe de commande un angle d'arrêt α ( figures 5 et 6) dont la valeur est inférieure à celle de l'angle d'arrêt α (figure 9) obtenu pour cette même direction d'inclinaison avec l'anneau 40B de plus grand diamètre intérieur.

Grâce à la mise en oeuvre d'anneaux 40A, 40B amovibles de diamètre intérieurs différents, l'utilisateur de la manette peut avantageusement régler très facilement et très rapidement la réactivité d'un organe de commande pivotant 3 de sa manette de jeu 1, notamment pour rendre cette réactivité plus adaptée au type de jeu auquel il souhaite jouer. Il lui suffit de choisir l'anneau 40A ou 40B dont le diamètre intérieur correspond à la réactivité souhaitée par l'utilisateur pour l'organe de commande pivotant 3 et de monter cet anneau amovible 40A ou 40B sur la coque 2 de sur la manette de jeu 1, sans devoir désassembler la coque 2 de la manette de jeu 1.

Plus particulièrement, il est possible par exemple de mettre en oeuvre trois anneaux amovibles différents dimensionnés de manière à obtenir respectivement trois valeurs d'angle d'arrêt différents pour chaque tête utilisée.

Dans ce cas, on augmente avantageusement le nombre de possibilités pour les valeurs de l'angle d'arrêt α.

### Autres variantes de réalisation (liste non exhaustive)

L'invention n'est pas limitée à la variante particulière de réalisation des figures annexées.

En particulier, et de manière non exhaustive, l'invention n'est pas limitée à la structure particulière et aux dimensions particulières des têtes 32A, 32B, 32C illustrées sur les figures annexées.

La tête 32A, 32B, 32C n'est pas nécessairement spécifiquement adaptée pour être manipulée au moyen d'un pouce de la main, l'invention s'étendant plus généralement à tout organe de commande 3 pivotant manipulable manuellement, quels que soient notamment la structure, la géométrie, les dimensions et les matériaux constitutifs de la tête 32A, 32B, 32C de l'organe de commande 3. Par exemple, l'organe de commande 3 peut être un « stick » pivotant de type joystick préhensible avec deux doigts d'une main ou avec toute la main.

Lorsque la tête 32A, 32B, 32C est amovible, les moyens d'assemblage de la tête avec l'élément de base 30 peuvent être différents de ceux qui ont été précédemment décrits, la tête amovible pouvant par exemple être vissée ou assemblée au moyen d'aimants ou équivalent.

L'élément de protection 31 de la variante des figures annexées est optionnel et pourrait être supprimé. Dans ce cas, la tête de l'organe de commande 3 pivotant peut être montée directement sur l'arbre pivotant 300 de l'élément de base 30, sans pièce intermédiaire 31.

Dans l'invention, l'anneau 40A ou 40B est un élément de réglage de l'angle d'arrêt α comportant un bord intérieur qui délimite une ouverture 40b qui est circulaire.

Dans une autre variante, cette ouverture 40b peut ne pas être circulaire, et peut par exemple être de type polygonal ou elliptique.

L'insert 4 dans les variantes des figures annexées est optionnel et pourrait être supprimé. Dans ce cas, l'anneau 40A u 40B peut être fixé directement, selon le cas de manière définitive ou de manière amovible, sur le bord d'une ouverture dans la coque 2 de la manette de jeu. Egalement, lorsqu'il n'est pas amovible, cet anneau 40A ou 40B peut faire partie intégrante de la coque 2 de la manette de jeu 1.

## Revendications

1. Ensemble comportant une manette de jeu (1) comportant une coque (2) assemblée et au moins un organe de commande (3) pivotant qui est passé à travers la coque (2) assemblée,qui est apte à être incliné manuellement dans toutes les directions depuis une position de repos dans laquelle il est rappelé élastiquement en rotation et qui comporte un arbre pivotant (300) et au moins une première tête (32A) et une deuxième tête (32B), qui sont aptes, chacune séparément et en l'absence de tête assemblée avec l'arbre pivotant (300), à être assemblées de manière amovible avec l'arbre pivotant (300) sans désassembler la coque (2) de la manette de jeu (1) et à être désassemblées de l'arbre pivotant (300) sans désassembler la coque (2) de la manette de jeu (1), et qui sont adaptées de telle sorte que l'organe de commande (3), comprenant la première tête ou la deuxième tête assemblée avec l'arbre pivotant (300), est apte à être incliné manuellement, pour chaque direction d'inclinaison, jusqu'à une position d'arrêt, **caractérisé en ce que** dans ladite position d'arrêt ladite première tête ou ladite deuxième tête est en butée et permet de bloquer l'inclinaison de l'organe de commande (3) avec un angle d'arrêt (α) par rapport à la position de repos, la valeur de l'angle d'arrêt (α) obtenu avec la première tête étant différente de la valeur de l'angle d'arrêt (α) obtenu pour une même direction d'inclinaison avec la deuxième tête.

2. Ensemble selon la revendication 1, dans lequel la valeur de l'angle d'arrêt (α) de l'organe de commande (3) par rapport à sa position de repos est identique pour toutes les directions d'inclinaison de l'organe de commande (3).

3. Ensemble selon l'une quelconque des revendications précédentes, dans lequel la tête ou chaque tête (32A, 32B, 32C) comporte un pied (321) dont la face extérieure (3210a) forme un cylindre droit de section transversale circulaire sur au moins une partie de la hauteur (H) du pied (321) destinée à venir en butée lorsque l'organe de commande (3) est incliné en position d'arrêt.

4. Ensemble selon l'une quelconque des revendications 1 ou 2, dans lequel chaque tête ( 32A, 32B, 32C) comporte un pied (321) dont la face externe (3210a), forme un cylindre droit de section transversale circulaire sur au moins une partie de la hauteur (H) du pied (321) destinée à venir en butée lorsque l'organe de commande (3) est incliné en position d'arrêt, et dans laquelle les diamètres extérieurs (Dₒᵤₜ) desdites parties cylindriques des faces externes (3210a) à section transversale circulaire sont différents.

5. Ensemble selon l'une quelconque des revendications précédentes, comportant un bord intérieur (40a), qui entoure l'organe de commande (3) et qui délimite dans la coque assemblée (2) une ouverture (40b), à travers laquelle est positionné l'organe de commande (3), ledit bord intérieur (40a) fait office de butée basse en rotation lorsque l'organe de commande (3) est incliné en position d'arrêt.

6. Ensemble selon la revendication 5, dans lequel l'ouverture (40b) délimitée par ledit bord intérieur (40a) est circulaire.

7. Ensemble selon l'une quelconque des revendications 1 à 6, comportant au moins un premier élément de réglage (40A) comportant un bord intérieur (40a) et un deuxième élément réglage (40B) comportant un bord intérieur (40a), lesquels premier et deuxième éléments de réglage (40A ; 40B) sont aptes, chacun séparément et en l'absence d'élément de réglage assemblé avec la coque , à être assemblés de manière amovible avec la coque (2) de la manette de jeu (1), sans désassembler ladite coque (2), de telle sorte que leur bord intérieur (40a) entoure l'organe de commande (3), et sont aptes à être retirés de la coque (2) de manette de jeu (1) sans désassembler ladite coque (2), et chaque élément de réglage (40A ; 40B) est adapté de telle sorte que lorsqu'il est assemblé avec la coque (2), l'organe de commande (3) est apte à être incliné manuellement, pour chaque direction d'inclinaison, jusqu'à une position d'arrêt, dans laquelle il est en butée contre le bord intérieur (40a) dudit élément de réglage (40A ; 40B) qui permet de bloquer l'inclinaison de l'organe de commande (3) avec un angle d'arrêt (α) par rapport à la position de repos, la valeur de l'angle d'arrêt (α) obtenu avec le premier élément de réglage (40A) étant différente de la valeur de l'angle d'arrêt (α) obtenu pour une même direction d'inclinaison avec le deuxième élément de réglage (40B).

8. Ensemble selon la revendication 7, dans lequel le bord intérieur (40a) de chaque l'élément de réglage délimitant une ouverture (40b) qui est circulaire, et les diamètres de ces ouvertures (40b) circulaires étant différents.

9. Ensemble selon l'une quelconque des revendications précédentes, dans lequel la valeur de l'angle d'arrêt (α) de l'organe de commande (3) par rapport à sa position de repos est inférieure à 90° et de préférence comprise entre 20° et 70°.

10. Ensemble selon l'une quelconque des revendications précédentes, dans lequel une partie (30) de l'organe de commande pivotant (3) est logée et est fixée à l'intérieur de la coque (2) assemblée, et la manette de jeu comporte des capteurs positionnés à l'intérieur de la coque (2) assemblée et mesurant la rotation de l'organe de commande (3) pivotant.

11. Procédé de réglage de l'angle d'arrêt (α) de l'organe de commande (3) pivotant d'un ensemble de l'une quelconque des revendications 1 à 10, ledit procédé de réglage comprenant l'assemblage de manière amovible de l'une des têtes (32A, 32B, 32C) avec l'arbre pivotant (300) de l'organe de commande (3) sans désassembler la coque (2) de la manette de jeu (1), de telle sorte que l'organe de commande (3) est apte à être incliné manuellement pour chaque direction d'inclinaison jusqu'à une position d'arrêt, dans laquelle la tête (32A, 32B, 32C) de l'organe de commande (3) est en butée et permet de bloquer l'inclinaison de l'organe de commande (3).

12. Procédé selon la revendication 11, permettant le réglage de l'angle d'arrêt (α) de l'organe de commande (3) pivotant de l'ensemble de l'une quelconque des revendications 7 ou 8, comprenant l'assemblage de manière amovible de l'un des éléments de réglage avec la coque (2) de la manette de jeu, sans désassembler la coque (2) de la manette de jeu (1), et de telle sorte que l'organe de commande (3) est apte à être incliné manuellement pour chaque direction d'inclinaison jusqu'à une position d'arrêt, dans laquelle l'organe de commande (3) est en butée contre ledit élément de réglage qui permet de bloquer l'inclinaison de l'organe de commande (3).

## Patentansprüche

1. Anordnung mit einem Spiele-Controller (1) mit einer zusammengesetzten Schale (2) und mindestens einem schwenkbaren Steuerelement (3), das durch die zusammengesetzte Schale (2) geht und geeignet ist, manuell in alle Richtungen aus einer Ruhestellung, in der sie elastisch in Drehung versetzt ist, geneigt zu werden, und die eine Schwenkwelle (300) und mindestens einen ersten Kopf (32A) und einen zweiten Kopf (32B) aufweist, die jeweils einzeln in der Lage sind, bei Fehlen eines mit der Schwenkwelle (300) verbundenen Kopfes lösbar mit der Schwenkwelle (300) verbunden zu werden, ohne die Schale (2) des Spiele-Controllers (1) zu zerlegen, und von der Schwenkwelle (300) getrennt zu werden, ohne die Schale (2) des Spiele-Controllers (1) zu zerlegen, und die so angepasst sind, dass das Steuerelement (3), das den ersten Kopf oder den zweiten Kopf, der mit der Schwenkwelle (300) zusammengebaut ist, umfasst, geeignet ist, für jede Neigungsrichtung bis zu einer Stopp-Position manuell geneigt zu werden, **dadurch gekennzeichnet, dass** in der genannten Stopp-Position der erste Kopf oder der zweite Kopf im Anschlag ist und es ermöglicht, die Neigung des Steuerelements (3) mit einem Stoppwinkel (α) in Bezug auf die Ruhestellung zu blockieren, wobei sich der Wert des Stoppwinkels (α), der mit dem ersten Kopf erhalten wird, von dem Wert des Stoppwinkels (α) unterscheidet, der für eine gleiche Neigungsrichtung mit dem zweiten Kopf erhalten wird.

2. Anordnung nach Anspruch 1, wobei der Wert des Stoppwinkels (α) des Steuerelements (3) aus seiner Ruhestellung für alle Neigungsrichtungen des Steuerelements (3) gleich ist.

3. Anordnung nach einem der vorhergehenden Ansprüche, wobei der Kopf oder jeder Kopf ( 32A, 32B, 32C) einen Fuß (321) aufweist, dessen Außenseite (3210a) einen geraden Zylinder mit kreisförmigem Querschnitt über mindestens einen Teil der Höhe (H) des Fußes (321) bildet, der dazu bestimmt ist, in Anschlag zu kommen, wenn das Steuerelement (3) in die Stopp-Position geneigt ist.

4. Anordnung nach einem der Ansprüche 1 oder 2, bei der jeder Kopf (32A, 32B, 32C) einen Fuß (321) aufweist, dessen Außenseite (3210a) einen geraden Zylinder mit kreisförmigem Querschnitt über mindestens einen Teil der Höhe (H) des Fußes (321) bildet, der bestimmt ist, in Anschlag zu kommen, wenn das Steuerelement (3) in die Stopp-Position geneigt ist, und wobei die Außendurchmesser (Dₒᵤₜ) der zylindrischen Abschnitte der Außenflächen (3210a) mit kreisförmigem Querschnitt unterschiedlich sind.

5. Anordnung nach einem der vorhergehenden Ansprüche, mit einer Innenkante (40a), die das Steuerelement (3) umgibt und in der zusammengesetzten Schale (2) eine Öffnung (40b) begrenzt, durch die das Steuerelement (3) positioniert wird, wobei die Innenkante (40a) als niedriger Drehanschlag dient, wenn das Steuerelement (3) in die Stopp-Position geneigt ist.

6. Anordnung nach Anspruch 5, wobei die von der Innenkante (40a) begrenzte Öffnung (40b) kreisförmig ist.

7. Anordnung nach einem der Ansprüche 1 bis 6, umfassend mindestens ein erstes Einstellelement (40A) mit einer Innenkante (40a) und ein zweites Einstellelement (40B) mit einer Innenkante (40a), wobei das erste und das zweite Einstellelement (40B) eine Innenkante (40a) aufweisen, wobei die Einstellelemente (40A; 40B) geeignet sind, jeweils separat und in Abwesenheit eines mit der die Schale (2) des Spiele-Controllers (1) verbundenen Einstellelements mit der Schale (2) verbunden zu werden, ohne die Schale (2) zu zerlegen, so dass ihre Innenkante (40a) das Steuerelement (3) umgibt, und die von der Schale (2) des Spiele-Controllers (1) entfernt werden können, ohne die Schale (2) zu zerlegen, und jedes Einstellelement (40A; 40B) so angepasst ist, dass das Steuerelement (3), wenn es mit der Schale (2) zusammengebaut ist, dazu geeignet ist, manuell für jede Neigungsrichtung in eine Stopp-Position geneigt zu werden, in der es an die Innenkante (40a) des Einstellelements (40A; 40B) anstößt, die es ermöglicht, die Neigung des Steuerelements (3) mit einem Stoppwinkel (α) in Bezug auf die Ruhestellung zu blockieren, wobei der Wert des Stoppwinkels (α), der mit dem ersten Einstellelement (40A) erhalten wird, sich von dem Wert des Stoppwinkels (α) unterscheidet, der für eine gleiche Neigungsrichtung mit dem zweiten Einstellelement (40B) erhalten wird.

8. Anordnung nach Anspruch 7, wobei die Innenkante (40a) jedes Einstellelements eine Öffnung (40b) begrenzt, die kreisförmig ist, und die Durchmesser dieser kreisförmigen Öffnungen (40b) verschieden sind.

9. Anordnung nach einem der vorhergehenden Ansprüche, wobei der Wert des Stoppwinkel (α) des Steuerelements (3) aus seiner Ruhestellung weniger als 90° und bevorzugt zwischen 20° und 70° beträgt.

10. Anordnung nach einem der vorhergehenden Ansprüche, wobei ein Teil (30) des schwenkbaren Steuerelements (3) im Inneren der zusammengesetzten Schale (2) untergebracht und befestigt ist, und der Spiele-Controller über Sensoren verfügt, die im Inneren der zusammengesetzten Schale (2) angeordnet sind und die Drehung des schwenkbaren Steuerelements (3) messen.

11. Verfahren zum Einstellen des Stoppwinkel (α) des schwenkbaren Steuerelements (3) einer Anordnung nach einem der Ansprüche 1 bis 10, wobei das Einstellverfahren das lösbare Verbinden eines der Köpfe (32A, 32B, 32C) mit der Schwenkwelle (300) des Steuerelements (3) ohne Zerlegen der Schale (2) des Spiele-Controller (1) umfasst, so dass das Steuerelement (3) für jede Neigungsrichtung manuell neigbar ist bis zu einer Stopp-Position, in der der Kopf (32A, 32B, 32C) des Steuerelements (3) anschlägt und es ermöglicht, die Neigung des Steuerelements (3) zu blockieren.

12. Verfahren nach Anspruch 11, das die Einstellung des Stoppwinkels (α) des schwenkbaren Steuerelements (3) der Anordnung nach einem der Ansprüche 7 oder 8 ermöglicht, umfassend das lösbare Verbinden eines der Einstellelemente mit der Schalte (2) des Spiele-Controllers, ohne die Schale (2) des Spiele-Controllers (1) zu zerlegen, und derart, dass das Steuerelement (3) geeignet ist, um manuell für jede Neigungsrichtung bis zu einer Stopp-Position, in der das Steuerelement (3) an das Einstellelement, das die Neigung des Steuerelements (3) blockieren kann, anstößt, geneigt zu werden.

## Claims

1. Assembly comprising a game controller (1) comprising an assembled shell (2) and at least one pivoting control member (3) which is passed through the assembled shell (2), which is able to be tilted manually in all directions from a rest position into which it returns in a rotationally elastic manner and which comprises a pivoting shaft (300) and at least a first head (32A) and a second head (32B), which are suitable, each separately and in absence of the head assembled with the pivoting shaft (300), for being removably assembled with the pivoting shaft (300) without disassembling the shell (2) from the game controller (1) and for being disassembled from the pivoting shaft (300) without disassembling the shell (2) from the game controller (1), and which are adapted such that the control member (3), comprising the first head or the second head assembled with the pivoting shaft (300), is capable of being tilted manually, for each tilting direction, to a stop position, **characterized in that** in said stop position said first head or said second head is in abutment and makes it possible to block the tilting of the control member (3) with a stop angle (α) with respect to the rest position, the value of the stop angle (α) obtained with the first head being different from the value of the stop angle (α) obtained for the same tilting direction with the second head.

2. Assembly according to claim 1, wherein the value of the stop angle (α) of the control member (3) with respect to its rest position is identical for all tilting directions of the control member (3).

3. Assembly according to one of the preceding claims, wherein the or each head (32A, 32B, 32C) comprises a foot (321), the outer face (3210a) of which forms a straight cylinder of circular cross-section over at least part of the height (H) of the foot (321) intended to come into abutment when the control member (3) is tilted in the stop position.

4. Assembly according to one of claims 1 or 2, wherein each head (32A, 32B, 32C) comprises a foot (321), the outer face (3210a) of which forms a straight cylinder of circular cross-section over at least part of the height (H) of the foot (321) intended to come into abutment when the control member (3) is tilted in the stop position, and wherein the external diameters (Dₒᵤₜ) of said cylindrical parts of the outer faces (3210a) of circular cross-section are different.

5. Assembly according to one of the preceding claims, comprising an inner edge (40a), which surrounds the control member (3) and which delimits an opening (40b) in the assembled shell (2) through which the control member (3) is positioned, and said inner edge (40a) acts as a bottom rotational stop when the control member (3) is tilted in the stop position.

6. Assembly according to claim 5, wherein the opening (40b) delimited by said inner edge (40a) is circular.

7. Assembly according to one of claims 1 to 6, comprising at least a first adjusting element (40A) comprising an inner edge (40a) and a second adjusting element (40B) comprising an inner edge (40a), which first and second adjusting elements (40A; 40B) are able, each separately and in the absence of adjusting element assembled with the shell, to be removably assembled with the shell (2) of the game controller (1), without disassembling said shell (2), so that their inner edge (40a) surrounds the control member (3), and are able to be removed from the game controller (1) without disassembling said shell (2), and each adjusting element (40A; 40B) is adapted such that when it is assembled with the shell (2), the control member (3) is able to be tilted manually, for each tilting direction, to a stop position, in which it abuts against the inner edge (40a) of said adjusting element (40A; 40B) which makes it possible to block the tilting of the control member (3) with a stop angle (α) with respect to the rest position, the value of the stop angle (α) obtained with the first adjusting element (40A) being different from the value of the stop angle (α) obtained for the same tilting direction with the second adjusting element (40B).

8. Assembly according to claim 7, the inner edge (40a) of each adjusting element defining an opening (40b) which is circular, and the diameters of these circular openings (40b) being different.

9. Assembly according to one of the preceding claims, wherein the value of the stop angle (α) of the control member (3) with respect to its rest position is less than 90° and preferably between 20° and 70°.

10. Assembly according to one of the preceding claims, wherein part (30) of the pivoting control member (3) is housed and is fastened inside the assembled shell (2), and the game controller comprises sensors positioned inside the assembled shell (2) and measuring the rotation of the pivoting control member (3).

11. Method of adjusting the stop angle (α) of the pivoting control member (3) of an assembly of one of claims 1 to 10, said adjusting method comprising removably assembling one of the heads (32A, 32B, 32C) with the pivoting shaft (300) of the control member (3) without disassembling the shell (2) of the game controller (1), such that the control member (3) is able to be tilted manually for each tilting direction to a stop position, in which the head (32A, 32B, 32C) of the control member (3) is in abutment and makes it possible to block the tilting of the control member (3).

12. Method according to claim 11, making it possible to adjust the stop angle (α) of the pivoting control member (3) of the assembly of one of claims 7 or 8, comprising the removable assembly of one of the adjusting elements with the shell (2) of the game controller, without disassembling the shell (2) of the game controller (1), and such that the control member (3) is able to be tilted manually for each tilting direction to a stop position, in which the control member (3) is in abutment against said adjusting element which makes it possible to block the tilting of the control member (3).
